Europäisches Patentamt

European Patent Office

Office européen des brevets

(19)

(11) Veröffentlichungsnummer: **0 318 677**
**A1**

(12) **EUROPÄISCHE PATENTANMELDUNG**

(21) Anmeldenummer: 88116631.8

(22) Anmeldetag: 07.10.88

(51) Int. Cl.⁴ **A61G 5/02** , **F16H 29/02**

(30) Priorität: 08.10.87 AT 2559/87
18.01.88 AT 85/88
19.09.88 AT 2280/88

(43) Veröffentlichungstag der Anmeldung:
07.06.89 Patentblatt 89/23

(84) Benannte Vertragsstaaten:
**AT DE FR GB IT SE**

(71) Anmelder: **Wimmer-Heusch, Friederike**
**Freinberger Strasse 5/1**
**A-5310 Mondsee(AT)**

(72) Erfinder: **Wimmer, Alois**
**Austrasse 2A**
**A-5061 Elsbethen Salzburg(AT)**

(74) Vertreter: **Liedl, Gerhard**
**Steinsdorfstrasse 21 - 22**
**D-8000 München 22(DE)**

(54) **Antriebsvorrichtung für muskelbetriebene Fahrzeuge.**

(57) Rollstuhl, bei dem die Antriebshebel (1, 2) für Handbetrieb vor der Brust des Benutzers angeordnet sind und sowohl der Druckhub als auch der Zughub jedes Hebels (1, 2) für den Vorwärtstrieb ausgenutzt wird. Die Antriebsvorrichtung soll bei einer speziellen Ausführungsform vom Rollstuhl abkoppelbar sein, so daß dieser im privaten Bereich in üblicher Weise benutzbar ist. Zur Kraftübertragung dienen an den Abtriebshebel angelenkte Pleuel (1c, 2c), die auf eine Kette (9) wirken, oder eine rahmenförmige Zahnstangenanordnung.

FIG. 2

EP 0 318 677 A1

## Antriebsvorrichtung für muskelbetriebene Fahrzeuge

Die Erfindung betrifft eine Antriebsvorrichtung für muskelgetriebene Fahrzeuge nach dem Oberbegriff des Anspruches 1 bzw. 5.

Es sind zum Beispiel aus der GB 134 890 Rollstühle bekannt, bei denen zwei verschwenkbare Handhebel je zwischen dem Fahrersitz und einem Laufrad angeordnet sind. Da der Kraftverlauf außerhalb des Brustkorbes erfolgt, führt dies zu einer sehr starken Drehbeanspruchung der Wirbelsäule. Der Wirkungsgrad ist relativ gering.

Es sind weiterhin Rollstuhlantriebe bekannt, bei denen eine Kurbel vor dem Brustkorb des Benutzers angeordnet ist. Durch Drehen der Kurbel mit den Händen wird der Rollstuhl fortbewegt. Auch hier ergibt sich das Problem, daß die Kurbelbetätigung einen geringen Wirkungsgrad hat und daß der Benutzer sehr rasch ermüdet, da der Handmuskelaufbau nicht diesem Bewegungsablauf entspricht.

Bei den mit Hebeln angetriebenen Rollstühlen besteht weiterhin der Nachteil, daß im allgemeinen nur ein Hebelhub ausgenutzt wird. Der andere Hub erfolgt im Freilauf. Abgesehen von dem geringen Wirkungsgrad ergibt sich der Nachteil, daß bei Steigungen immer beide Hebel betätigt werden müssen, also keine Hand z.B. für eine Fahrtrichtungsanzeige frei ist.

Der Erfindung liegt nun die Aufgabe zugrunde, eine Antriebsvorrichtung für muskelgetriebene Fahrzeuge vorzuschlagen, bei der die Bedienungsgriffe für die Handhebel vor der Brust des Benutzers angeordnet sind und bei der beide Hübe also der in Fahrtrichtung erfolgende Druckhub und der entgegen der Fahrtrichtung erfolgende Zughub zur Fortbewegung des Fahrzeuges ausgenützt werden.

Gemäß einer speziellen Ausführungsform soll ermöglicht werden, daß die Antriebsvorrichtung an übliche Rollstühle angekoppelt wird. Der Rollstuhl kann dementsprechend z.B. im privaten Wohnungsbereich ohne die Antriebsvorrichtung mit den Vorteilen eines geringeren Platzbedarfes betrieben werden. Für den Straßenbetrieb wird dann die Antriebsvorrichtung angekoppelt.

Die Lösung der Aufgabe ergibt sich aus den Merkmalen der Ansprüche 1 und 5. Die Unteransprüche beschreiben bevorzugte Ausführungsformen.

Bei dem Rollstuhl gemäß der Erfindung addieren sich also jeweils die Zugkraft des einen Armes mit der Druckkraft des anderen Armes, wodurch eine höhere Antriebskraft erreicht wird, die sich beispielsweise beim Überwinden von Steigungen sehr günstig auswirkt.

Durch den unterschiedlichen Einsatz der Muskeln, wobei sowohl die Druckkraft als auch die Zugkraft der Arme ausgenützt werden, ergeben sich geringere Ermüdungserscheinungen. Wenn einer der Arme ausfällt, hat man immer noch eine fortwährende Antriebskraft durch den anderen Arm.

Auf den beiliegenden Zeichnungen sind bevorzugte Ausführungsformen des Gegenstandes der Erfindung dargestellt.

Es zeigen:

Fig. 1 einen Schnitt durch eine erste Ausführungsform einer Antriebsvorrichtung;

Fig. 2 einen Schnitt durch eine gegenüber Fig. 1 abgewandelte Ausführungsform;

Fig. 3 einen Schnitt einer Variante in Form eines Zahnradgetriebes für die Übertragung der Antriebsleistung;

Fig. 4 eine Seitenansicht eines Rollstuhles, an welchem eine Antriebsvorrichtung gemäß der Erfindung angekoppelt ist;

Fig. 5 eine Draufsicht auf den Rollstuhl mit angekoppelter Antriebsvorrichtung gemäß Fig.4;

Fig. 6 u.7 Einzelheiten;

Fig. 8 eine Antriebsvorrichtung mit einer umlaufenden Kette zur Übertragung der Antriebskraft auf die Hinterräder;

Fig. 9 in vergrößertem Maßstab eine Einzelheit aus Fig. 8;

Fig. 10 einen Schnitt durch eine Ausführungsform mit Kraftübertragung durch ein Rahmenelement mit Zahnrädern;

Fig. 11 einen Schnitt durch die Hinterachse bei der Ausführungsform gemäß Fig. 10.

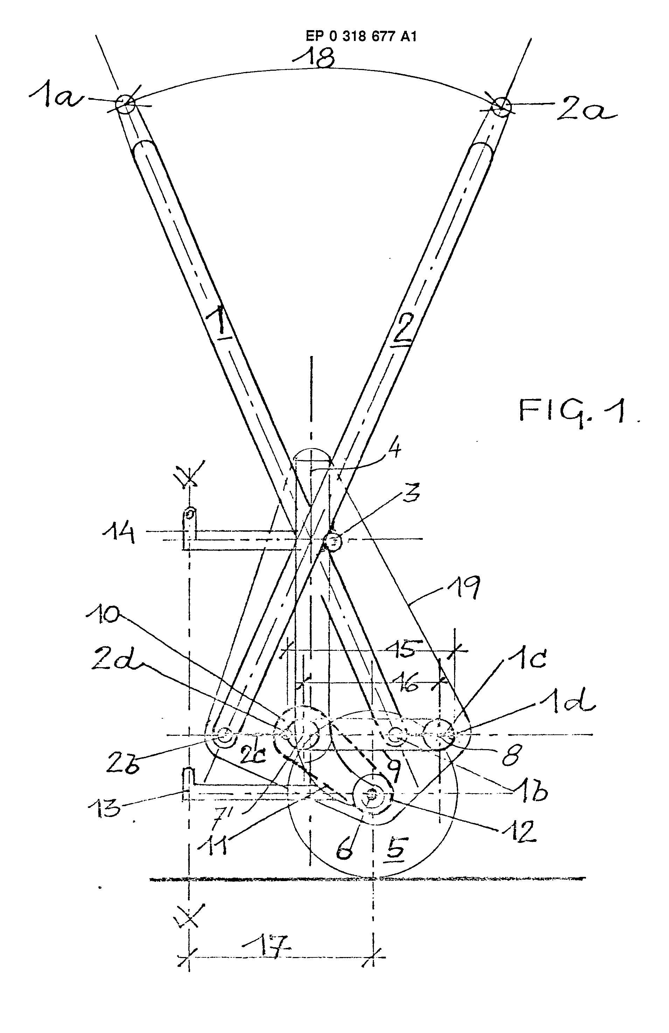

Bei der in Fig. 1 dargestellten Ausführungsform sind zwei zweiarmige Hebel 1 und 2 mit oben angebrachten Handgriffen 1a und 2a vorgesehen. Die Hebel 1 und 2 besitzen einen gemeinsamen Drehpunkt um eine Scharnierwelle 3, welche an einer ein Laufrad 5 mit einer Achse 6 tragenden Säule 4 angeordnet ist. An den unteren Enden der Hebel 1 und 2 sind Pleuellager 1b und 2b vorgesehen, an denen Pleuel 1c und 2c schwenkbar angeordnet sind. Die Pleuel 1c und 2c werden an einer Umlaufkette 9 mit Kettenmitnehmern 1d und 2d geführt. Die Umlaufkette 9 läuft über Zahnräder 7' und 8.

Der Schwenkweg der Handgriffe 1a bzw. 2a ist mit 18 bezeichnet. Der Hub der Pleuel 1c und 2c ist mit 15 und der Achsabstand vom Zahnrad 7' zum Zahnrad 8 mit 16 bezeichnet.

Das Zahnrad 7' ist auf einer Welle gemeinsam mit einem Zahnrad 10 gelagert, das über eine Kette 11 die Antriebskraft auf ein Zahnrad 12 überträgt, das mit dem Laufrad 5 fest verbunden ist und so die eingeleiteten Kraftbewegungen in eine Fortbewegung umsetzt.

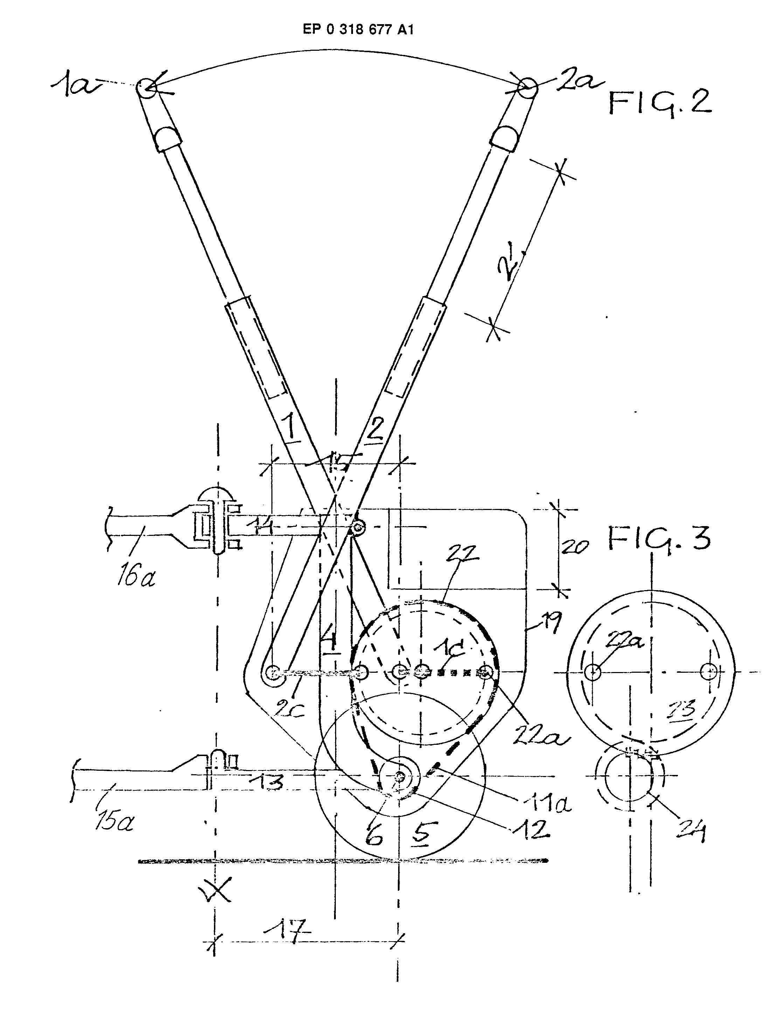

Die Antriebsvorrichtung wird über Zapfenarme 13 und 14 an einem oberen bzw. unteren Verbindungselement mit Ankopplungselementen des Rollstuhles 15a und 16a (Fig. 2) drehbar verbunden. Die Lenkung erfolgt mittels Knick lenkung um die vertikale Achse x-x. Zum Schutz des Antriebmechanismusses ist eine Verkleidung 19 vorgesehen. Bei der Lenkung erfolgt eine Verschwenkung des Laufrades 5 um den Radius 17 ermöglicht.

Bei der in Fig. 2 dargestellten Ausführungsform sind die Pleuel 1c und 2c an Wellenzapfen 22a auf einem Zahnrad 22 geführt, das über eine Kette 11a die Kraft auf das Zahnrad 12 überträgt, mit welchem das Laufrad 5 verbunden ist. In der Verkleidung 19 ist noch ein Ablagefach 20 untergebracht. Die Handgriffe 1a und 1b sind mittels eines Teleskopmechanismusses 21 einschiebbar, so daß beliebige Krafthebelübersetzungen gewählt werden können.

Bei der in Fig. 3 dargestellten abgewandelten Ausführungsform wird anstelle der Kette 11a ein entsprechender Zahnradeingriff 23, 24 vorgesehen. Die Übersetzung kann in Form einer Gangschaltung mit mehreren Zahnradpaaren wählbar sein.

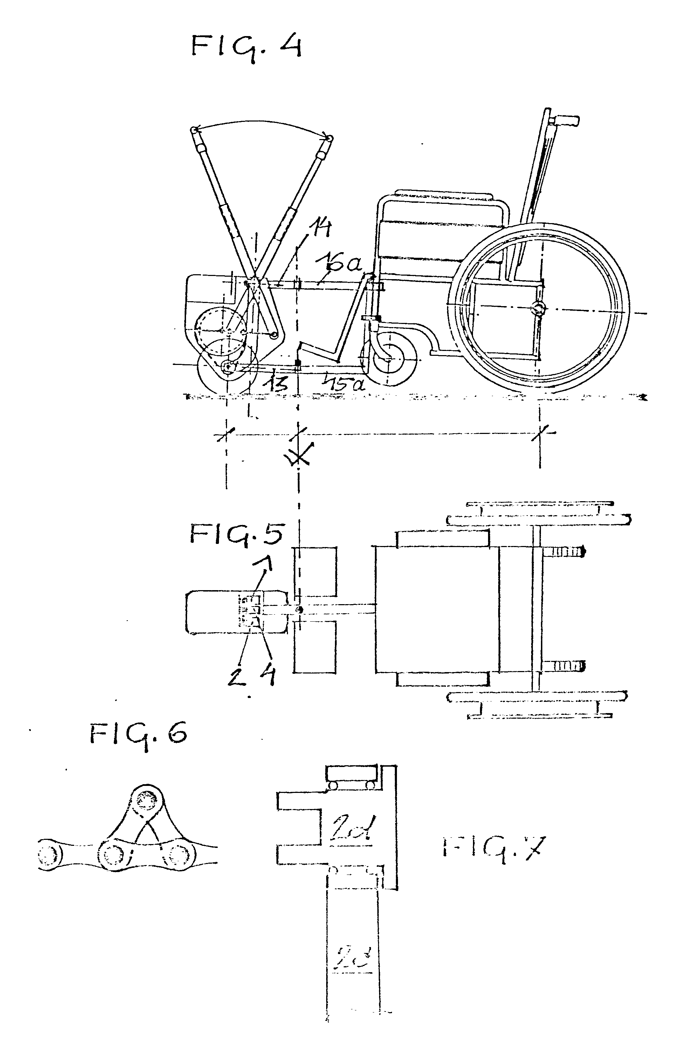

Die Fig. 4 und 5 zeigen einen üblichen Rollstuhl, welcher mit einer, wie zuvor beschriebenen, Antriebsvorrichtung gekoppelt ist. Es ergibt sich eine Knicklenkung um die Achse x. Nach dem Abkoppeln der Antriebsvorrichtung ist der Rollstuhl wieder wie bisher zu verwenden.

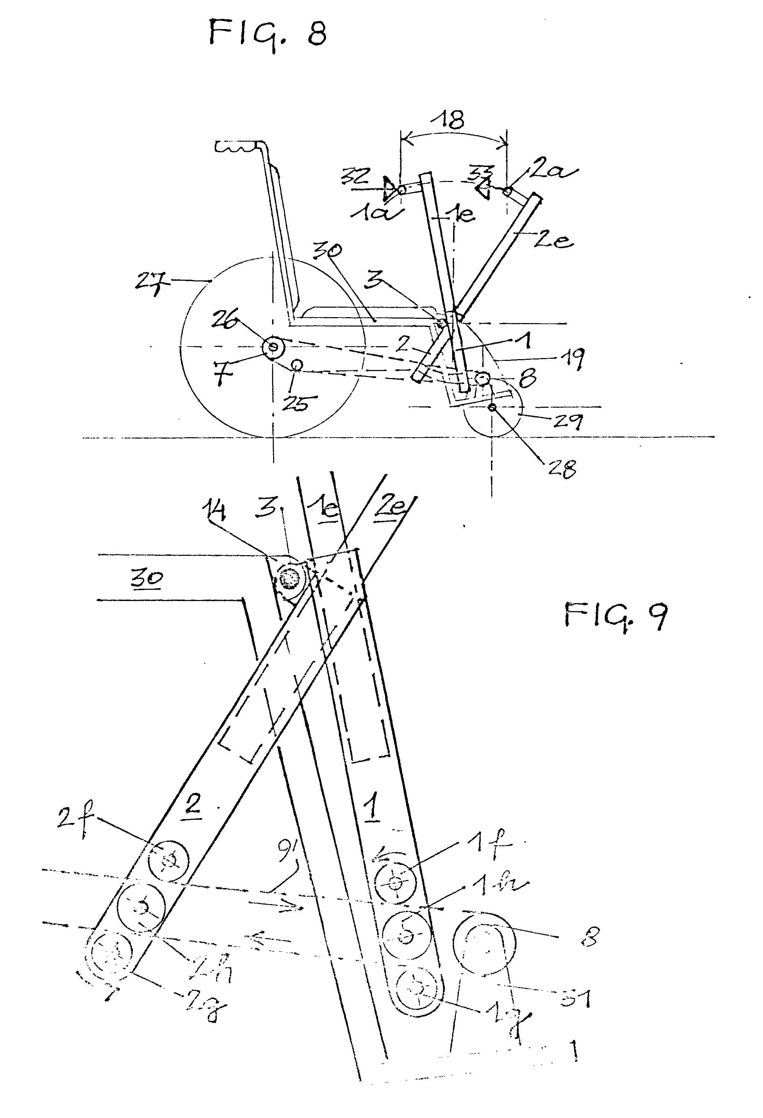

Die Fig. 6 und 7 zeigen ein Kettenmitnehmerelement. Das Mitnehmerelement ist aus mehreren Kettengliedern dreiecksförmig zusammengesetzt. Der mit der Pleuelstange 2c verbundene Kettenmitnehmer 2d greift steckerartig in die Kette ein.

Bei der in Fig. 8 dargestellten Ausführungsform sind die an der Scharnierwelle 3 drehbar gelagerten zweiarmigen Hebel 1 und 2 aufgeteilt. Der jeweilige obere Hebelarm 1e und 2e ist aus dem unteren Hebelarm herausziehbar. Dies ermöglicht ein unbehindertes Ein- und Aussteigen. Trotzdem ergibt sich dann der Vorteil, daß nach dem Einstecken die Hebel 1,2 unmittelbar vor dem Brustbereich des Rollstuhlbenutzers angeordnet sind, so daß sich ein dementsprechender wirkungsvoller Antrieb bei relativ geringem Kraftaufwand ergibt.

Die oberen Hebelteile 1e und 2e können nach dem Herausnehmen in eine freie Halterung an der zugehörigen Außenseite des Rollstuhles eingeschoben werden.

Die Handgriffe 1a und 2a sind als Drehgriffe ausgeführt, die durch Bowdenzüge mit dem Lenkmechanismus des um die Achse 29 drehbaren Vorderrades oder der Vorderräder 29 verbunden sind. Bei Drehung der Drehgriffe werden die Vorderräder 29 richtungsgleich gelenkt. Bei Anbringung eines Handbremshebels an den Drehgriffen 1a und 2a wird über Bowdenzüge eine Bremsung des Rollstuhles ermöglicht. Diese Lenk- und Bremsfunktionen bleiben auch aufrechterhalten, wenn die Hebel 1e und 2e beidseitig am Rollstuhl in die Halterungen eingesteckt sind, da die Bowdenzüge einen entsprechenden freien Bewegungsraum ermöglichen.

Bei der in Fig. 9 dargestellten Ausführungsform sind am unteren Ende der Hebel 1 und 2 jeweils zwei Zahnräder 1f und 1g bzw. 2f und 2g sowie je eine Kettenabstandsrolle 1h bzw. 2h drehbar gelagert. Die Zahnräder 1f, 2f und 1g, 2g sind auf je einem Freilauf gelagert, so daß jedes Zahnrad jeweils in einer Drehrichtung - entsprechend den Pfeilen in der Zeichnung im Uhrzeigersinn - nicht drehbar ist. Die Kraftübertragung von den Zahnrädern 1f und 1g bzw. 2f und 2g auf die Kette 9 erfolgt jeweils nur durch ein Zahnrad eines Hebels, während das zweite Zahnrad sich im Freilauf - entsprechend dem Pfeil in der Zeichnung entgegen dem Uhrzeigersinn - bewegt.

Es ist jeweils für jeden der Hebel 1 und 2 eine Umlaufkette 9' vorgesehen, welche über das zwischen den Füßen am Rollstuhlrahmen 31 befestigte Zahnrad 8 und das auf der Hinterachse 26 befestigte Zahnrad 7 sowie über einen Kettenspanner 25 verläuft.

Die Befestigung der Antriebsvorrichtung erfolgt über das Scharniergelenk 3 mit dem Zapfenarm 14 des Rahmens 30 des Rollstuhles. Die Achse des Vorderrades 29 ist mit 28 bezeichnet.

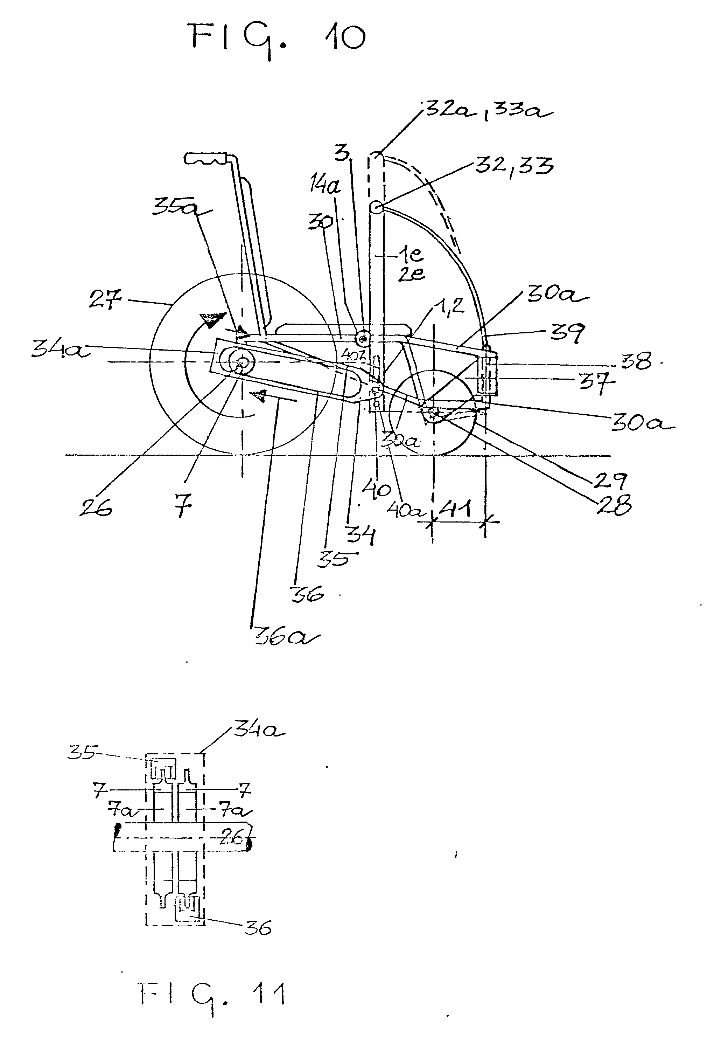

Bei der in Fig. 10 dargestellten Vorrichtung sind die Hebel 1 und 2 jeweils über Verankerungsplatten 14a am seitlichen Rollstuhlrahmen 30 an der Welle 3 drehbar gelagert. Die oberen Hebelteile 1e und 2e tragen je einen Griff 32, 33 und sind nach innen aus den Stellungen 32a,33a klappbar, d.h. beim Ein- und Aussteigen wird der obere Hebelteil mit Griff nach oben oder seitlich geklappt. Mit dem unteren Teil des Hebels 1 bzw. 2 ist bei 40 jeweils ein geschlossenes Rahmenelement 34 gelenkig verbunden, welches zugeordnete, an der Hinterachse 26 eines Hinterrades 27 angeordnete Zahnräder 7 mit Freilauf umschließt. Der untere gerade Rahmenteil und der obere gerade Rahmenteil besitzen einander entgegengerichtete Zahnstangenelemente 35, 36, die jeweils im Eingriff mit einem der beiden Zahnräder 7 an der Hinterradachse sind. Die untere Zahnstange 36 ist mit einem der Zahnräder 7 in Eingriff, wobei die Hebelkraft nur in der Pfeilrichtung 36a übertragen wird. In entgegengesetzter Bewegungsrichtung gibt der Freilauf diese Gegenbewegung frei, d. h. das Zahnrad bewegt sich im entgegengesetzten Drehsinn im Freilauf.

Die obere Zahnstange 35 überträgt die Hebelkraft nur in der Pfeilrichtung 35a. Damit die Zahnstangen 35, 36 im dauernden Eingriff mit beiden Zahnrädern bleiben, sind diese an ihrem Ende mit einem Verbindungselement 34a, welches als Distanzhalter dient, zusammengehalten.

Mit 40 ist die Verbindungswelle zwischen Rahmenelement 34 und Hebel 1, 2 bezeichnet. 40a sind Bohrungen bzw. 40b ein Schlitz im Hebel 1, 2 zur Aufnahme der Verbindungswelle 40, so daß eine beliebige Hebelarmlänge zwischen der Welle 3 und Welle 40 gewählt werden kann. 39 ist ein Gelenk - oder Biegewelle.

Fig. 11 zeigt einen Schnitt durch die Hinterachse 26 mit im Zahnrad 7 oben eingreifender Zahnstange 35 und am anderen Zahnrad 7 unten eingreifender Zahnstange 36. In den Zahnrädern 7 ist ein Freilauf 7a includiert.

Die Zahnstangen 35, 36 können auch in Form einer Leiterschiene ausgebildet sein oder es kann auch jeweils eine Kette an einem Verstärkungsrahmen befestigt und angespannt sein.

Bei einem zusammenklappbaren Rollstuhl ist jedes Vorderrad 29 mit seiner Achse 28 einzeln am Rahmen befestigt. Es ist daher auch keine Spurstange zum Lenken der Vorderräder möglich. Es wird dementsprechend von dem drehbaren Handgriff 32, 33 über eine daran befestigte biegsame Welle 39 in Verbindung mit einer Gelenkwelle 38 einer daran angeflanschten Führungsplatte 37 über die Achse 28 das Vorderrad 29 in seiner Bewegung geführt. Durch den Nachlauf 41 des Vorderrades 29 ist jeweils nur die Lenkung eines Vorderrades 29 erforderlich, da das zweite Vorderrad durch den Nachlauf 41 der vorgegebenen Bahn läuft. Die Gelenkwelle 38 der Vorderräder 29 werden durch einen Aussteifungsrahmen 30a festgehalten.

**Ansprüche**

1. Antriebsvorrichtung für muskelgetriebene Fahrzeuge, insbesondere für Rollstühle, bei der zwei in und gegen die Fahrtrichtung verschwenkbare Hebel auf ein Antriebsrad wirken, **dadurch gekennzeichnet,** daß sowohl die Schwenkbewegung in Fahrtrichtung als auch die Schwenkbewegung gegen die Fahrtrichtung jedes Hebels (1, 2) auf das Antriebsrad in gleichsinniger Drehrichtung übertragbar ist und daß die Handgriffe (1a, 2a) der Hebel (1, 2) sich im Fahrbetrieb im Brustbereich des Benutzers befinden, zum Ein- und Aussteigen jedoch aus diesem entfernbar sind.

2. Antriebsvorrichtung nach Anspruch 1, **dadurch gekennzeichnet,** daß die Schwenkbewegung jedes Hebels (1, 2) auf eine rahmenförmige Zahnstangenanordnung (34) übertragen wird und daß die obere Zahnstange (35) auf ein erstes Zahnrad (7) und die untere Zahnstange (36) auf ein zweites Zahnrad (7) jeweils bei dem Vorwärtshub bzw. Rückwärtshub im gleichen Drehsinn einwirkt (Fig. 10).

3. Antriebsvorrichtung nach Anspruch 2, **dadurch gekennzeichnet,** daß die Zahnräder (7, 7') je mit einem Freilauf versehen sind.

4. Antriebsvorrichtung nach Ansprüchen 1 bis 3, **dadurch gekennzeichnet,** daß der Handgriff (1a, 2a) jedes Hebels (1, 2) drehbar ist und daß die Drehbewegung getrennt auf ein zugeordnetes Vorderrad (5), insbesondere über eine am Handgriff befestigte biegsame Welle (39) zur Lenkung desselben übertragen wird.

5. Antriebsvorrichtung für muskelgetriebene Fahrzeuge insbesondere von Rollstühlen, bei der zwei in und gegen die Fahrtrichtung verschwenkbare Hebel auf ein Antriebsrad wirken, **dadurch gekennzeichnet,** daß eine um eine vertikale Achse (x) drehbare Ankoppelungsvorrichtung (13, 15a; 14, 16a) vorgesehen ist, mit welcher die auf ein oder mehrere Vorderräder (5) wirkende Antriebseinrichtung mit der Vorderseite eines üblichen Rollstuhles gekoppelt werden kann.

6. Antriebsvorrichtung nach Anspruch 5, **dadurch gekennzeichnet,** daß die Hebel (1, 2) über Pleuelstangen (1c und 2c) auf eine Zwischenscheibe (22) einwirken, über welche das Vorderrad (5) angetrieben wird.

7. Antriebsvorrichtung nach Ansprüchen 1 bis 6, **dadurch gekennzeichnet,** daß die an den unteren Enden der Hebel (1, 2) angeordneten Pleuelstangen (1c, 2c) je mit einer Kette (9) verbunden sind, welche über Zahnräder (7, 8) läuft, und daß eines der Zahnräder (7) über ein Zahnradgetriebe oder eine Kette (11) ein Vorderrad (5) antreibt.

8. Antriebsvorrichtung nach Ansprüchen 1 bis 7, **dadurch gekennzeichnet,** daß die Handhebel (1, 2) an einem gemeinsamen Drehpunkt (3) scharnierartig an einer Radstütze (4) gelagert sind.

9. Antriebsvorrichtung nach Anspruch 7, **dadurch gekennzeichnet,** daß der Kettenmitnehmer (1d, 2d) steckerartig in eine Anordnung aus drei Kettengliedern in Dreiecksform eingreift (Fig. 6, 7).

10. Antriebsvorrichtung nach Ansprüchen 1 bis 9, **dadurch gekennzeichnet,** daß die Handhebel (1, 2) in der Länge verstellbar und arretierbar sind.

11. Antriebsvorrichtung nach einem der Ansprüche 1 bis 10, **dadurch gekennzeichnet,** daß jeder Handhebel (1, 2) an seinem unteren Ende zwei Zahnräder (1f, 1g; 2f, 2g) mit includiertem Freilauf trägt, welche in das obere bzw. untere Drum einer Umlaufkette (9') eingreifen und daß zwischen den Zahnrädern je eine Kettenabstandsrolle (1h; 2h) vorgesehen ist (Fig. 9).

FIG. 1.

FIG.2

FIG.3

FIG. 4

FIG. 5

FIG. 6

FIG. 7

FIG. 8

FIG. 9

# FIG. 10

# FIG. 11

Europäisches Patentamt

**EUROPÄISCHER RECHERCHENBERICHT**

Nummer der Anmeldung

| EINSCHLÄGIGE DOKUMENTE | | | EP 88116631.8 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
| X | DE - A1 - 3 131 679 (KLOSNER)<br>* Gesamt *<br>-- | 1 | A 61 G 5/02<br>F 16 H 29/02 |
| A | DE - A1 - 3 414 447 (HAASE)<br>* Gesamt *<br>-- | 1-3 | |
| A | DE - C - 41 444 (NEUHÄUSER)<br>* Gesamt *<br>-- | 1,7 | |
| A | FR - A - 788 398 (VIMEUX)<br>* Fig. 7 *<br>-- | 1,6 | |
| A | US - A - 3 994 509 (SCHAEFFER)<br>* Fig. 1,9 *<br>-- | 1,11 | RECHERCHIERTE SACHGEBIETE (Int. Cl.4) |
| A | EP - A - 0 128 448 (MOBILITY)<br>* Fig. 2; Anspruch 1 *<br>-- | 5 | A 61 G 5/00<br>F 16 H 29/00<br>F 16 H 19/00 |
| A | GB - A - 579 539 (BARTLETT)<br>---- | | |

Der vorliegende Recherchenbericht wurde für alle Patentansprüche erstellt.

| Recherchenort | Abschlußdatum der Recherche | Prüfer |
|---|---|---|
| WIEN | 28-12-1988 | SCHMIDT |